# EUROPEAN PATENT APPLICATION

(11) **EP 4 560 154 A1**
(43) Date of publication of application: **28.05.2025**
(21) Application number: 23211441.3
(22) Date of filing: 22.11.2023
(51) Int. Cl.: F16B 25/00

(54) **TIPWARD TAPER ZONE OF VARIABLE AXIAL LENGTH**

(71) Applicant: Hilti Aktiengesellschaft, 9494 Schaan (LI)
(72) Inventor: Singer, Markus, 9000 St. Gallen (CH); Strouf, Mathias, 9464 Rüthi (CH); Vargas Gonzalez, Alejandro, 9470 Buchs (CH)
(74) Representative: Hilti Aktiengesellschaft Corporate Intellectual Property

(57) **Abstract**

Concrete screw comprising a shaft, which has a tip, a rear end and a longitudinal axis that extends through the tip and through the rear end, wherein the shaft has a threaded zone and an unthreaded zone that is located axially adjacent to the threaded zone, wherein the threaded zone is located closer to the tip than is the unthreaded zone, and a thread helix that is attached to the shaft in the threaded zone of the shaft, characterized in that the shaft has a tipward taper zone of variable axial length.

## Description

The invention relates to a concrete screw according to the preamble of claim 1.

US2016003284 A1 discloses a concrete screw having cutting recesses disposed in a tip zone of the shaft. Near the end zone of the shaft, the shaft has two unthreaded zones of different diameter.

EP0139195 B1, US6089806 A, US3681963 A and EP1207312 A2 disclose various screws, including screws with tri-lobular thread designs.

US2016001348 A1 a concrete screw, wherein the shaft has a greater eccentricity in a cross-section of the shaft in a tip zone than in a center zone, with the tip zone located axially closer to the tip than the center zone.

EP1188938 A1 discloses a screw thread having a circular cylindrical core and an outer thread diameter forming a wavy structure.

The inventive concrete screw comprises a shaft, which has a tip, a rear end and a longitudinal axis that extends through the tip and through the rear end, wherein the shaft has a threaded zone and an unthreaded zone that is located axially adjacent to the threaded zone, wherein the threaded zone is located closer to the tip than is the unthreaded zone, and a thread helix that is attached to the shaft in the threaded zone of the shaft. The screw is characterized in that the shaft has a tipward taper zone of variable axial length.

The screw is a concrete screw, which means that the screw, in particular the thread helix, has sufficient hardness to cut concrete so as to form a mating thread. The sufficient hardness might be provided by intrinsic hardness of the thread helix, but also by at least one optional cutting body embedded in the thread helix.

The tip and the rear end are arranged at opposite end sections of the shaft. The threaded zone and the unthreaded zone are axially extending sections of the shaft, and they are axially adjacent to one another. In certain embodiments, the adjoin one another, i.e. they touch one another. The threaded zone and the unthreaded zone are axially non-overlapping. The tipward taper zone of variable axial length is also an axially extending section of the shaft.

The thread helix winds around the shaft and around the longitudinal axis. It might deviate from a strict mathematical helix, for example, it might have variable pitch. The screw might also comprise at least one auxiliary thread helix. This auxiliary thread helix might axially overlap the thread helix, in particular close to a rearward end of the thread helix.

In the tipward taper zone, the shaft, in particularly its outer surface, tapers, i.e. it converges, namely towards the tip. Accordingly, in said zone, the shaft becomes smaller has it approaches the tip. The tipward taper zone has variable axial length, i.e. the axial length of said zone is non constant along the circumferential direction. Thus, at different points in the circumferential direction, said zone has different axial lengths.

The tip is preferably blunt, but could also be pointed.

Throughout this document, wherever the terms "axially", "longitudinally", "radially" and "circumferentially" are used, they should refer, in particular, to the longitudinal axis.

Preferably, the tipward taper zone of variable axial length is located within the unthreaded zone. Accordingly, the tipward taper zone of variable axial length and the unthreaded zone have axial overlap. In particular, the unthreaded zone has greater length than the maximum axial length of the tipward taper zone of variable axial length.

Alternatively, the tipward taper zone of variable axial length may preferentially adjoin the unthreaded zone. Accordingly, the tipward taper zone of variable axial length and the unthreaded zone are axially non-overlapping, but located right next to one another. In particular, the thread helix may extend into the tipward taper zone of variable axial length. Accordingly, the thread helix and the tipward taper zone of variable axial length have axial overlap.

Advantageously, the concrete screw has a head that is attached to the shaft at the rear end of the shaft. This head could e.g. be a hex head or a countersunk head. If a head is provided, the tipward taper zone of variable axial length may preferably adjoin the head. Accordingly, this zone axially touches the head.

The axial length of the tipward taper zone of variable axial length has preferably at least two maxima, more preferably three maxima.

It is particularly preferred that the tipward taper zone of variable axial length has generally constant axial distance from the rear end of the shaft.

All the above features might be associated with particularly good performance of the screw.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 shows a side view of a first embodiment of a screw.
Figure 2 shows a detail side view of the screw of figure 1, showing details of the tipward taper zone of variable axial length.
Figure 3 shows a side view of a second embodiment of a screw.
Figure 4 shows a detail side view of the screw of figure 3, showing details of the tipward taper zone of variable axial length.
Figure 5 shows a side view of a third embodiment of a screw.
Figure 6 shows a detail side view of the screw of figure 5, showing details of the tipward taper zone of variable axial length.
Figure 7 shows a cross sectional view C-C of the screw of figure 5.
Figure 8 shows a cross sectional view D-D of the screw of figure 5.
Figure 9 shows a cross sectional view F-F of the screw of figure 5.
Figure 10 shows a front view of a screw of figure 5.
Figure 11 shows a cross sectional view B-B of the screw of figure 10.
Figure 12 shows a cross sectional view A-A of the screw of figure 10.

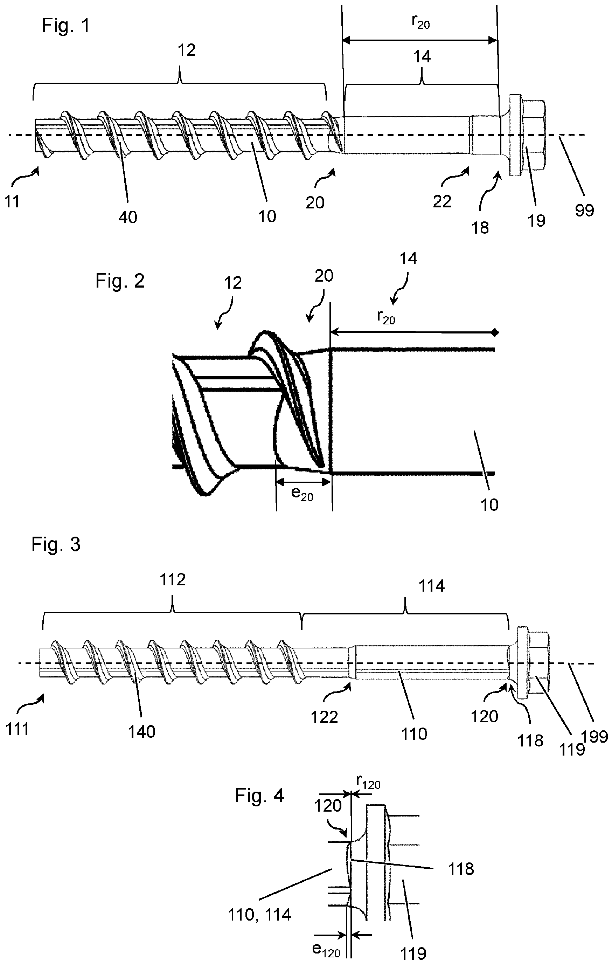

A first embodiment of a screw is shown in figures 1 and 2. The screw comprises an elongate shaft 10, which has a tip 11 and a rear end 18. The tip 11 and the rear end 18, respectively, are opposite regions of the shaft 10. The tip 11 leads the shaft 10 and is intended to be inserted first into a hole when the screw is installed as intended. A longitudinal axis 99 of the shaft 10 extents through the shaft 10, and through both the tip 11 and the rear end 18.

The screw further comprises a thread helix 40, which is attached to the shaft 10, and which winds around the shaft 10 and around the longitudinal axis 99. In the present embodiment, the shaft 10 and the thread helix 40 are monolithic, by way of example.

The screw further comprises a head 19, which is attached to the shaft 10 at the rear end 18 of the shaft 10. In the present embodiment, the head 19 is a hex head, by way of example. Alternatively, it could e.g. be a countersunk head, or another suitable head. In the present embodiment, the shaft 10 and the head 19 are monolithic, by way of example.

The shaft 10 has a threaded zone 12, which is that axially extending section of the shaft 10 where the thread helix 40 and the shaft 10 overlap axially. The shaft 10 also has an unthreaded zone 14, which an axially extending section of the shaft 10 that is devoid of thread helixes.

The threaded zone 12 and the unthreaded zone 14 are, axially, adjacent to one another. The tip 11 is located closer to the threaded zone 12 than to the unthreaded zone 14. In particular, the threaded zone 12 includes the tip 11. However, in other embodiments, the tip 11 might also be axially distant from the threaded zone 12. The unthreaded zone 14 is located, axially, between the threaded zone 12 and the head 19. The unthreaded zone 14 adjoins the rear end 18 of the shaft 10.

The shaft 10 has a tipward taper zone 20 of variable axial length e₂₀. This zone 20 has a tipward taper, which means that in this zone 20, the surface of the shaft 10 converges towards the tip 11. This zone 20 furthermore has variable axial length e₂₀, which means the length of this zone 20, when considered in the direction of the longitudinal axis 99, is not constant around the longitudinal axis 99. In the present embodiment, the axial length e₂₀ of the zone 20 has three length maxima and three length minima.

In the present embodiment, the tipward taper zone 20 of variable axial length e₂₀ adjoins the unthreaded zone 14, namely at the rearward end of the tipward taper zone 20. The tipward taper zone 20 also adjoins the threaded zone 12, namely at the tipward end of the tipward taper zone 20. The tipward taper zone 20 is thus located axially between the threaded zone 12 and the unthreaded zone 14. In the present embodiment, the thread helix 40 extends, at its rearward end region, into the tipward taper zone 20. However, generally, the thread helix 40 can also be axially distant from the tipward taper zone 20 of variable axial length e₂₀.

The tipward taper zone 20 of variable axial length e₂₀ has generally constant axial distance r₂₀ from the rear end 18 of the shaft 10, which means that the axial distance r₂₀ from the rear end 18 of the shaft 10 does not change around the longitudinal axis 99. In other words, the zone 20 has generally constant rearward reach.

Since the axial distance r₂₀ of the zone 20 from the rear end 18 of the shaft 10 is generally constant, whereas the axial length e₂₀ of the zone 20 is variable around the longitudinal axis 99, the tipward reach of this zone 20 is variable around the longitudinal axis 99, i.e. the axial distance of the zone 20 from the tip 11 is variable around the longitudinal axis 99. In particular, the zone 20 thus includes tabs that project towards the tip 11, wherein the number of tabs in particular corresponds to the number of length maxima of the axial length e₂₀ of the zone 20.

In order to form this type of zone 20, the shaft 10 may have generally circular cross section where it adjoins the zone 20 at the rearward end of the zone 20, and the shaft 10 may have generally non-circular, in particular tri-lobular cross section where it adjoins the zone 20 at the tipward end of the zone 20.

The shaft 10 of the screw of the present embodiment moreover comprises a tipward taper zone 22 of generally constant axial length and of generally constant axial distance from the rear end 18 of the shaft 10. This zone 22 is located within the unthreaded zone 14, in particular axially distant from both the tipward end of the unthreaded zone 14 and from the rearward end of the unthreaded zone 14.

A second embodiment of a screw is shown in figures 3 and 4. The screw comprises an elongate shaft 110, which has a tip 111 and a rear end 118. The tip 111 and the rear end 118, respectively, are opposite regions of the shaft 110. The tip 111 leads the shaft 110 and is intended to be inserted first into a hole when the screw is installed as intended. A longitudinal axis 199 of the shaft 110 extents through the shaft 110, and through both the tip 111 and the rear end 118.

The screw further comprises a thread helix 140, which is attached to the shaft 110, and which winds around the shaft 110 and around the longitudinal axis 199. In the present embodiment, the shaft 110 and the thread helix 140 are monolithic, by way of example.

The screw further comprises a head 119, which is attached to the shaft 110 at the rear end 118 of the shaft 110. In the present embodiment, the head 119 is a hex head, by way of example. Alternatively, it could e.g. be a countersunk head, or another suitable head. In the present embodiment, the shaft 110 and the head 119 are monolithic, by way of example.

The shaft 110 has a threaded zone 112, which is that axially extending section of the shaft 110 where the thread helix 140 and the shaft 110 overlap axially. The shaft 110 also has an unthreaded zone 114, which an axially extending section of the shaft 110 that is devoid of thread helixes.

The threaded zone 112 and the unthreaded zone 114 are, axially, adjacent to one another. The tip 111 is located closer to the threaded zone 112 than to the unthreaded zone 114. In particular, the threaded zone 112 includes the tip 111. However, in other embodiments, the tip 111 might also be axially distant from the threaded zone 112. The unthreaded zone 114 is located, axially, between the threaded zone 112 and the head 119. The unthreaded zone 114 adjoins the rear end 118 of the shaft 110.

The shaft 110 has a tipward taper zone 120 of variable axial length e₁₂₀. This zone 120 has a tipward taper, which means that in this zone 120, the surface of the shaft 110 converges towards the tip 111. This zone 120 furthermore has variable axial length e₁₂₀, which means the length of this zone 120, when considered in the direction of the longitudinal axis 199, is not constant around the longitudinal axis 199. In the present embodiment, the axial length e₁₂₀ of the zone 120 has three length maxima and three length minima.

In the present embodiment, the tipward taper zone 120 of variable axial length e₁₂₀ is located within the unthreaded zone 114, right next to the rear end 118 of the shaft 110. In particular, the rearward end of the zone 120 coincides with the rear end 118 of the shaft 110. The zone 20 thus adjoins the head 119.

The tipward taper zone 120 of variable axial length e₁₂₀ has generally constant axial distance r₁₂₀ from the rear end 118 of the shaft 110, which means that the axial distance r₁₂₀ from the rear end 118 of the shaft 110 does not change around the longitudinal axis 199. In other words, the zone 120 has generally constant rearward reach. In the present embodiment, this axial distance r₁₂₀ is generally zero throughout.

Since the axial distance r₁₂₀ of the zone 120 from the rear end 118 of the shaft 110 is generally constant, whereas the axial length e₁₂₀ of the zone 120 is variable around the longitudinal axis 199, the tipward reach of this zone 120 is variable around the longitudinal axis 199, i.e. the axial distance of the zone 120 from the tip 111 is variable around the longitudinal axis 199. In particular, the zone 120 thus includes tabs that project towards the tip 111, wherein the number of tabs in particular corresponds to the number of length maxima of the axial length e₁₂₀ of the zone 120.

In order to form this type of zone 120, the head 199 may have generally circular cross section where it adjoins the zone 120 at the rearward end of the zone 120, and the shaft 110 may have generally non-circular, in particular tri-lobular cross section where it adjoins the zone 120 at the tipward end of the zone 120. In particular, both the threaded zone 112 and the unthreaded zone 114 might have generally non-circular, in particular tri-lobular cross section.

The shaft 110 of the screw of the present embodiment moreover comprises a tipward taper zone 122 of generally constant axial length and of generally constant axial distance from the rear end 118 of the shaft 110. This zone 122 is located within the unthreaded zone 114, in particular axially distant from both the tipward end of the unthreaded zone and from the rearward end of the unthreaded zone 114. The zone 122 is located closer to the tip 11 than is the zone 120.

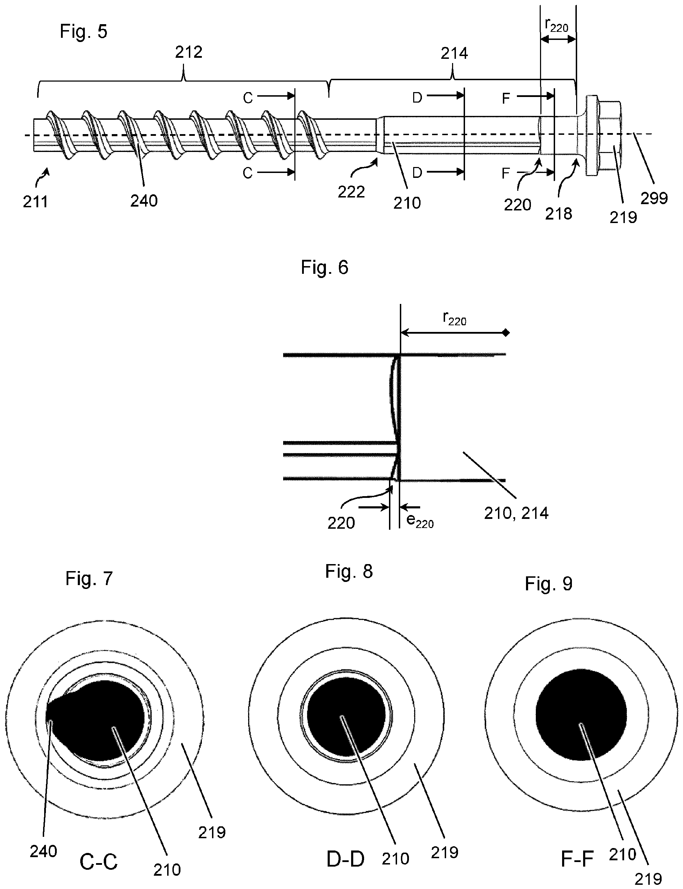

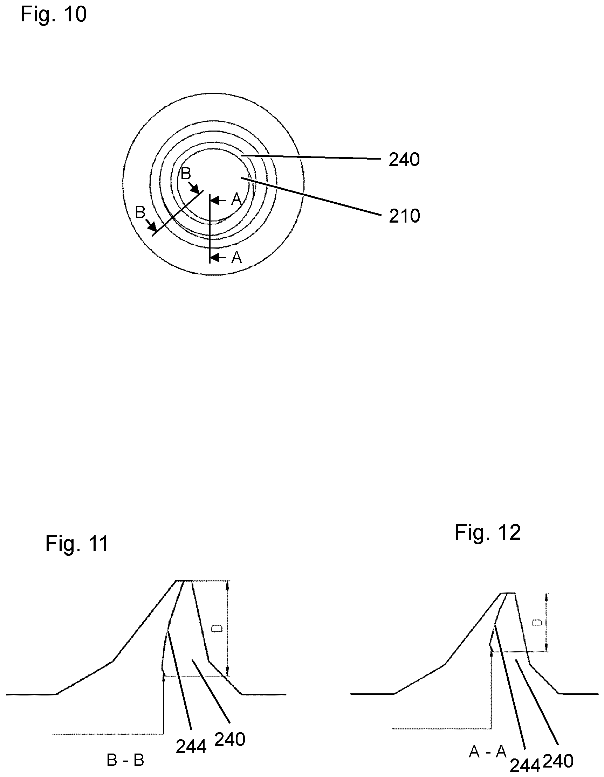

A third embodiment of a screw is shown in figures 5 to 12. The screw comprises an elongate shaft 210, which has a tip 211 and a rear end 218. The tip 211 and the rear end 218, respectively, are opposite regions of the shaft 210. The tip 211 leads the shaft 210 and is intended to be inserted first into a hole when the screw is installed as intended. A longitudinal axis 299 of the shaft 210 extents through the shaft 210, and through both the tip 211 and the rear end 218.

The screw further comprises a thread helix 240, which is attached to the shaft 210, and which winds around the shaft 210 and around the longitudinal axis 299. In the present embodiment, the shaft 210 and the thread helix 240 are monolithic, by way of example.

The screw further comprises a head 219, which is attached to the shaft 210 at the rear end 218 of the shaft 210. In the present embodiment, the head 219 is a hex head, by way of example. Alternatively, it could e.g. be a countersunk head, or another suitable head. In the present embodiment, the shaft 210 and the head 219 are monolithic, by way of example.

The shaft 210 has a threaded zone 212, which is that axially extending section of the shaft 210 where the thread helix 240 and the shaft 210 overlap axially. The shaft 210 also has an unthreaded zone 214, which an axially extending section of the shaft 210 that is devoid of thread helixes.

The threaded zone 212 and the unthreaded zone 214 are, axially, adjacent to one another. The tip 211 is located closer to the threaded zone 212 than to the unthreaded zone 214. In particular, the threaded zone 212 includes the tip 211. However, in other embodiments, the tip 211 might also be axially distant from the threaded zone 212. The unthreaded zone 214 is located, axially, between the threaded zone 212 and the head 219. The unthreaded zone 214 adjoins the rear end 218 of the shaft 210.

The shaft 210 has a tipward taper zone 220 of variable axial length e₂₂₀. This zone 220 has a tipward taper, which means that in this zone 220, the surface of the shaft 210 converges towards the tip 211. This zone 220 furthermore has variable axial length e₂₂₀, which means the length of this zone 220, when considered in the direction of the longitudinal axis 299, is not constant around the longitudinal axis 299. In the present embodiment, the axial length e₂₂₀ of the zone 220 has three length maxima and three length minima.

In the present embodiment, the tipward taper zone 220 of variable axial length e₂₂₀ is located within the unthreaded zone 214, in the axial middle thereof (i.e. at a distance both from the rearward end and from the tipward end of the unthreaded zone 214).

The tipward taper zone 220 of variable axial length e₂₂₀ has generally constant axial distance r₂₂₀ from the rear end 218 of the shaft 210, which means that the axial distance r₂₂₀ from the rear end 218 of the shaft 210 does not change around the longitudinal axis 299. In other words, the zone 220 has generally constant rearward reach. In the present embodiment, this axial distance r₂₂₀ is greater than the minimum axial length e₂₂₀ of the zone 220, but in other embodiments, this might be different.

Since the axial distance r₂₂₀ of the zone 220 from the rear end 218 of the shaft 210 is generally constant, whereas the axial length e₂₂₀ of the zone 220 is variable around the longitudinal axis 299, the tipward reach of this zone 220 is variable around the longitudinal axis 299, i.e. the axial distance of the zone 220 from the tip 211 is variable around the longitudinal axis 299. In particular, the zone 220 thus includes tabs that project towards the tip 211, wherein the number of tabs in particular corresponds to the number of length maxima of the axial length e₂₂₀ of the zone 220.

In order to form this type of zone 220, shaft 210 may have generally circular cross section where it adjoins the zone 220 at the rearward end of the zone 220 (this generally circular cross section being shown in figure 9), and the shaft 210 may have generally non-circular, in particular tri-lobular cross section where it adjoins the zone 220 at the tipward end of the zone 220 (this generally non-circular cross section being shown in figure 8). In particular the unthreaded zone 214 might also have generally non-circular, in particular tri-lobular cross section (the generally non-circular cross section of the threaded zone 212 being shown in figure 7). This the shaft has generally non-circular, in particular tri-lobular cross section tipwardly of the zone 220, and generally circular cross section rearwardly of this zone 220.

The shaft 210 of the screw of the present embodiment moreover comprises a tipward taper zone 222 of generally constant axial length and of generally constant axial distance from the rear end 218 of the shaft 210. This zone 222 is located within the unthreaded zone 214, in particular axially distant from both the tipward end of the unthreaded zone and from the rearward end of the unthreaded zone 214. The zone 222 is located closer to the tip 11 than is the zone 220.

The thread helix 240 also might have generally non-circular, in particular tri-lobular outer shape. When the thread helix 240 is formed by rolling, a fissure 244 might form within the thread helix 240 (namely where material that has been upset from opposite axial sides meets). When the thread helix 240 has generally non-circular, in particular tri-lobular outer shape, the depth D of the fissure 244 might vary. This might be since during rolling, pressure and amount of material flow might vary depending on where on the tri-lobular pattern the forming takes place.

## Claims

1. Concrete screw comprising
a shaft (10, 110, 210), which has a tip (11, 111, 211), a rear end (18, 118, 218) and a longitudinal axis (99, 199, 299) that extends through the tip (11, 111, 211) and through the rear end (18, 118, 218), wherein the shaft (10, 110, 210) has a threaded zone (12, 112, 212) and an unthreaded zone (14, 114, 214) that is located axially adjacent to the threaded zone (12, 112, 212), wherein the threaded zone is located closer to the tip (11, 111, 211) than is the unthreaded zone (14, 114, 214),
and a thread helix (40, 140, 240) that is attached to the shaft (10, 110, 210) in the threaded zone (12, 112, 212) of the shaft (10, 110, 210), **characterized in that**
- the shaft (10, 110, 210) has a tipward taper zone (20, 120, 220) of variable axial length (e_{20,} e_{120,} e₂₂₀).

2. Concrete screw according to claim 1,
**characterized in that**
the tipward taper zone (120, 220) of variable axial length (e_{120,} e₂₂₀) is located within the unthreaded zone (114, 214).

3. Concrete screw according to claim 1,
**characterized in that**
the tipward taper zone (20) of variable axial length (e₂₀) adjoins the unthreaded zone (14).

4. Concrete screw according to claim 3,
**characterized in that**
the thread helix (40) extends into the tipward taper zone (20) of variable axial length (e₂₀).

5. Concrete screw according to any of the preceding claims,
**characterized in that**
the concrete screw has a head (19, 119, 219) that is attached to the shaft (10, 110, 210) at the rear end (18, 118, 218) of the shaft (10, 110, 210).

6. Concrete screw according to claim 5,
**characterized in that**
the tipward taper zone (120) of variable axial length (e₁₂₀) adjoins the head (119).

7. Concrete screw according to any of the preceding claims,
**characterized in that**
the axial length (e₂₀, e₁₂₀, e₂₂₀) of the tipward taper zone (20, 120, 220) of variable axial length (e_{20,} e_{120,} e₂₂₀) has at least two maxima.

8. Concrete screw according to any of the preceding claims,
**characterized in that**
the tipward taper zone (20, 120, 220) of variable axial length (e_{20,} e_{120,} e₂₂₀) has generally constant axial distance (r_{20,} r_{120,} r₂₂₀) from the rear end (18, 118, 218) of the shaft (10, 110, 210).
